# EUROPÄISCHE PATENTANMELDUNG

(11) **EP 0 846 904 A1**
(43) Veröffentlichungstag der Anmeldung: **10.06.1998**
(21) Anmeldenummer: 97121014.1
(22) Anmeldetag: 29.11.1997
(51) Int. Cl.: F16K 39/02, B05B 1/30

(54) **Ventilanordnung mit direkt betätigtem Ventilkörper**

(30) Priorität: 05.12.1996 DE 19650379
(71) Anmelder: SUTTNER GMBH & CO. KG, D-33689 Bielefeld (DE)
(72) Erfinder: Arbeiter, Frank, Dipl.-Ing., 32052 Herford (DE)
(74) Vertreter: Patentanwälte Gesthuysen, von Rohr, Weidener, Schüll, Häckel

(57) **Zusammenfassung**

Gegenstand ist eine Ventilanordnung mit direkt betätigtem Ventilkörper (4), insbesondere für Hochdruckspritzpistolen, mit einem Ventilgehäuse (1) mit einem Ventilsitz (2) für den Ventilkörper (4), mit einem Zuflußraum (13) vor dem Ventilsitz (2) und einem Abflußraum (14) hinter dem Ventilsitz (2), die im geschlossenen Zustand des Ventils durch den Ventilkörper (4) auf dem Ventilsitz (2) voneinander getrennt sind, und mit einer Bewegungsdichtung (25) für den Ventilkörper (4) in einem Dichtungseinbauraum, die den Zuflußraum (13) am Ventilkörper (4) abdichtet, wobei sich ein Kanal (32, 33) vom Abflußraum (14) bis zu einer Kammer (23) des Dichtungseinbauraumes der Bewegungsdichtung (25) des Ventilkörpers (4) erstreckt, die im geschlossenen Zustand des Ventils auf der dem Druck im Zuflußraum (13) abgewandten Seite liegt, so daß der Ventilkörper (4) weitgehend oder vollständig druckkompensiert ist und wobei so außerdem die Bewegungsdichtung (25) des Ventilkörpers (4) im geöffneten Zustand des Ventils auf beiden Seiten der Dichtstelle mit dem gleichen Druck beaufschlagt ist, wobei der Ventilkörper (4) samt Dichtungseinbauraum vollständig innerhalb des Ventilgehäuses (1) angeordnet ist und wobei der Ventilkörper (4) von einem Betätigungselement betätigbar ist, das aus dem Inneren des Ventilgehäuses (1) nach außen, abgedichtet durch eine Dichtung (16), herausgeführt ist. Eine Optimierung ergibt sich hier dadurch, daß das Betätigungselement als eine in Bewegungsrichtung des Ventilkörpers (4) im Ventilgehäuse (1) verschiebbar gelagerte Betätigungsstange (5) ausgeführt, auf der Abflußseite des Ventilkörpers (4) angeordnet und nur mit dem vom Ventilkörper (4) abgewandten Ende aus dem Ventilgehäuse (1) herausgeführt ist.

## Beschreibung

Die Erfindung betrifft eine Ventilanordnung mit einem direkt betätigten Ventilkörper, insbesondere eine Ventilanordnung für Hochdruckspritzpistolen, mit den Merkmalen des Oberbegriffs von Anspruch 1.

Es gibt Ventilanordnungen in Hochdruckspritzpistolen für Wasser-Hochdruckreiniger mit einem direkt betätigten, nicht druckkompensierten Ventilkörper (DE - A - 39 26 461). Hochdruckreiniger mit solchen Ventilpistolen werden bei Reinigungsarbeiten in vielen Bereichen eingesetzt, beispielsweise im Sanitärbereich, im Baugewerbe etc. Die Ventilpistole weist eine manuell zu betätigende Ventilanordnung auf, die es dem Bediener ermöglicht, den unter hohem Druck strömenden Wasserfluß nach Belieben ein- und auszuschalten. Selbstverständlich muß die Ventilanordnung in der Ventilpistole selbsttätig schließen, sobald der Bediener den Handhebel der Ventilpistole losläßt.

An die Ventilanordnung in der Ventilpistole werden hohe Anforderungen gestellt. Sie muß neben einer hohen Druckfestigkeit ein möglichst geringes Gewicht aufweisen, da die Ventilpistole während der gesamten Reinigungszeit in der Hand gehalten werden muß. Die Strömungsquerschnitte müssen ausreichend groß bemessen sein, damit der Druckverlust möglichst gering ausfällt. Im geschlossenen Zustand muß sie absolut dicht sein.

Die Ventilanordnung muß auch bei leicht verschmutztem Wasser einwandfrei funktionieren und darf nicht anfällig gegen leichte Kalkablagerungen sein. Ferner soll die Öffnungskraft gegen den im Schlauch gespeicherten erhöhten Druck sowie die Kraft zum Offenhalten beim Arbeitsdruck ergonomisch vertretbar sein. Wünschenswert ist auch ein gedämpftes Öffnungsverhalten, so daß ein schlagartiger Druckanstieg in der Hochdruck-Reinigungslanze, und damit ein ebenso plötzlicher Anstieg der Reaktionskräfte (Rückschlag) infolge des mit hoher Geschwindigkeit aus der Düse austretenden Wassers vermieden wird. Nicht zuletzt muß sich die Ventilpistole wirtschaftlich herstellen lassen.

Einige der o.g. Anforderungen an Ventilpistolen für Hochdruckreiniger erfordern gegensätzliche Lösungswege, so daß bekannte Ventilanordnungen stets einen mehr oder weniger guten Kompromiß darstellen.

Bei der bekannten Ventilanordnung, von der die Erfindung ausgeht (DE - A - 28 53 719), ist es zweckmäßig, daß die Bewegungsdichtung für den Ventilkörper im Dichtungseinbauraum nur im geschlossenen Zustand des Ventils einseitig mit Druck beaufschlagt ist, während der Druck bei geöffnetem Ventilkörper wegen des Kanals im Ventilkörper auf beide Seiten der Bewegungsdichtung wirkt. Der Anpreßdruck zwischen der Dichtung und dem Ventilkörper entspricht bei geöffnetem Ventil also nur der Einbauvorspannung. Der bei nicht druckkompensierten Ventilkörpern gefürchtete Hafteffekt, der ein Schließen des Ventils verhindert, tritt insoweit hier nicht auf. Der schmierende Flüssigkeitsfilm zwischen Dichtung und Ventilkörper wird bei geöffnetem Ventil auch nicht verdrängt.

Die Bewegung des Ventilkörpers der bekannten Ventilanordnung erfolgt durch eine mit einem Antriebsnocken versehene Welle, die mittels einer Drehdurchführung aus dem Inneren des Ventilgehäuses nach außen abgedichtet herausgeführt ist. Die Welle durchsetzt im dargestellten Ausführungsbeispiel den stets mit vollem Systemdruck beaufschlagten Bereich, und selbst wenn man das konstruktiv vermeidet, erreicht die Welle direkt den bei geöffnetem Ventil mit vollem Systemdruck beaufschlagten Bereich des Druckausgleichsraums. Die Drehdurchführung muß also nach außen abgedichtet sein, um ein Austreten des Fluids zu verhindern. Diese Drehdurchführung muß als Axiallagerung ausgeführt werden, um ein Herausschieben der Welle aus dem Gehäuse zu verhindern, da bei geöffnetem Ventil druckabhängige Axialkräfte auf die Welle wirken. Diese Axiallagerung führt zu zusätzlicher Reibung mit den bekannten Folgen für die Sicherheit der Schließbewegung. Diese zusätzliche Reibung ist insbesondere Folge dessen, daß die Welle nach außen durch Dichtungen mit entsprechend hohen Dichtkräften herausgeführt werden muß. Die Axialkräfte können zwar vermieden werden, wenn man die Welle beidseitig aus dem Gehäuse herausführt, dann braucht man aber zwei Drehdurchführungen mit dem entsprechenden hohen konstruktiven und dichtungstechnischen Aufwand.

Hinsichtlich des Ventilkörpers muß die komplette Dichtungs- und Lagerreibung am Ventilkörper durch die Rückstellfeder für den Ventilkörper oder durch den außerhalb liegenden Betätigungsmechanismus für die Welle aufgebracht werden, da der bei geöffnetem Ventil im Inneren des Ventilgehäuses herrschende Druck auf die Welle keine Rückstellfunktion ausübt.

Insbesondere bei hohen Arbeitsdrücken (über 300 bar) sind besondere konstruktive Maßnahmen nötig, damit die Kräfte zum Öffnen und Offenhalten des Ventils in der Ventilanordnung in einem ergonomisch vertretbaren Bereich bleiben.

Eine weitere Lösung zeigt eine Ventilanordnung mit einem vorgesteuerten Ventilkörper, der also nicht direkt betätigt ist (DE - A - 31 09 845). Ergonomisch ist ein vorgesteuertes Ventil zwar zweckmäßig. Ein vorgesteuertes Ventil hat aber den prinzipiellen Nachteil, daß zwei Ventilpaarungen vorhanden sein müssen, die bei geschlossener Ventilanordnung beide dicht sein müssen. Dadurch sind in jedem Fall zwei Ventilsitze und zwei Anlageflächen von Ventilkörpern herstellungstechnisch zu bearbeiten, insbesondere also zu härten und zu schleifen. Das ist aufwendig und teuer. Die Ventilanordnung mit vorgesteuertem Ventil bedarf auch einer anderen Dichtungstechnik.

Bei einer anderen bekannten Konstruktion (DE - U - 81 18 510) weist der Ventilkörper nur auf der Zuflußseite eine zylindrische, aus dem Ventilgehäuse herausgeführte Verlängerung auf. Im Dichtbereich der Gehäusedurchführung ist der Querschnitt der Verlängerung so gewählt, daß er gleich oder annähernd gleich dem wirksamen Dichtquerschnitt am Ventilkegel ist. Das außerhalb des Ventilgehäuses liegende Ende des Ventilkörpers taucht, wiederum mit einer Bewegungsdichtung abgedichtet, in eine Druckkammer ein. Auch in diesem Dichtbereich ist der wirksame Dichtquerschnitt zumindest annähernd gleich dem Querschnitt des Ventilkegels. Zur Kraftkompensation im geöffneten Zustand ist die Druckkammer durch eine zentrale Bohrung mit der Abflußseite des Ventils verbunden. Im freiliegenden Bereich des Ventilkörpers zwischen der Gehäusedurchführung und der Druckkammer greift seitlich der Betätigungshebel am Ventilkörper an.

Auch hier besteht das Problem, daß zwei Bewegungsdichtungen für den Ventilkörper vorhanden sein müssen, die bei geöffnetem Ventil beide einseitig unter dem Systemdruck stehen. Ein schmierender Wasserfilm zwischen der Bewegungsdichtung und dem Ventilkörper wird somit schon nach kurzer Öffnungsdauer verdrängt. Die höhere Haftreibung hat dann zur Folge, daß die Rückstellfeder für ein sicheres Schließen des Ventilkörpers sehr stark aufgeführt sein muß. Gegen diese hohe Federkraft der Rückstellfeder muß der Ventilkörper in Offenstellung gehalten werden.

Da der Betätigungshebel zwischen der Gehäusedurchführung und der Druckkammer angeordnet ist, müssen überdies die großen hydraulischen Kräfte in der Druckkammer durch ein entsprechend aufwendig gestaltetes und dementsprechend großes Ventilgehäuse oder ein entsprechend stark ausgeführtes Pistolengehäuse aufgefangen werden.

Der Lehre der Erfindung liegt die Aufgabe zugrunde, die eingangs erläuterte bekannte Ventilanordnung mit direkt betätigtem Ventilkörper in kostengünstiger Weise so auszugestalten und weiterzubilden, daß sie sich auch bei hohen Drücken mit geringer Kraft öffnen, offenhalten und insbesondere sicher wieder schließen läßt, wobei im Verhältnis zum schaltbaren Öffnungsquerschnitt des Ventils eine möglichst geringe Baugröße und ein geringes Gewicht realisiert sein sollen.

Die zuvor aufgezeigte Aufgabe wird bei einer Ventilanordnung mit den Merkmalen des Oberbegriffs von Anspruch 1 durch die Merkmale des kennzeichnenden Teils von Anspruch 1 gelöst.

Erfindungsgemäß wird die querliegende Welle als Betätigungselement durch eine in Bewegungsrichtung des Ventilkörpers im Ventilgehäuse verschiebbar gelagerte Betätigungsstange ersetzt. Diese Betätigungsstange wird auf der Abflußseite des Ventilkörpers angeordnet und nur mit dem vom Ventilkörper abgewandten Ende, also einseitig, auf der Abflußseite aus dem Ventilgehäuse herausgeführt.

Anders als bei dem Stand der Technik wirkt hier der Systemdruck bei geöffnetem Ventil in axialer Richtung auf die Betätigungsstange. Die daraus resultierende Axialkraft ist prinzipiell größer als die Dichtungsreibung der mit dem gleichen Druck beaufschlagten Betätigungsstange. Es ist also an sich keine zusätzliche Kraft zur Rückstellung der Betätigungsstange in Schließrichtung nötig. Die Rückstellkraft braucht nicht durch die Rückstellfeder aufgebracht zu werden.

Die einseitig auf der Abflußseite des Ventilkörpers axial aus dem Ventilgehäuse abgedichtet herausgeführte Betätigungsstange ist für sich nicht neu. Es gibt ja die Ventilanordnungen mit direkt betätigtem, nicht druckkompensiertem Ventilkörper (DE - A - 39 26 461).

Die in axialer Richtung zum Ventilkörper auf der Abflußseite angeordnete und einseitig herausgeführte Betätigungsstange hat jedoch in Verbindung mit einem druckkompensierten Ventilkörper erhebliche Vorteile. Dadurch nämlich, daß die auf den Ventilkörper wirkenden hydraulischen Kräfte im Inneren des Ventilgehäuses bei geschlossenem Ventil durch entsprechende Durchmesserwahl von Führungszylinder und Ventilkegel praktisch vollständig ausgeglichen werden, kann die Betätigungsstange selbst einen sehr kleinen Durchmesser aufweisen, sie ist ja nicht hoch belastet. Infolge des kleinen Durchmessers der Betätigungsstange ergibt sich an der Dichtstelle für die Betätigungsstange nur eine geringe Kontaktlänge der Dichtung, so daß theoretisch denkbare Haftkräfte im Absolutwert sehr gering sind.

Die erfindungsgemäß mögliche, dünne Betätigungsstange verringert den Strömungsquerschnitt im Bereich des Ventilsitzes wegen ihrer Lage praktisch nicht, so daß auch bei einem relativ kleinen Durchmesser des Ventilsitzes vergleichsweise große wirksame Strömungsquerschnitte realisierbar sind. Folge davon ist, daß das Ventilgehäuse bei einem vorgegebenen Soll-Strömungsquerschnitt insgesamt kleiner und bei gleicher Druckfestigkeit ebenfalls mit geringerer Wandstärke ausgeführt werden kann. Die erfindungsgemäße Ventilanordnung ist also kompakt und relativ leicht. Da bei Ventilanordnungen der in Rede stehenden Art für den in Rede stehenden Druckbereich von mehreren 100 bar hochwertige Werkstoffe erforderlich sind, macht sich insoweit der reduzierte Materialeinsatz wirtschaftlich erheblich bemerkbar.

Das erfindungsgemäße Ventil ist aufgrund des Zusammenwirkens von druckkompensiertem Ventilkörper und axial abflußseitig herausgeführter Betätigungsstange sehr leicht zu öffnen und leicht offen zu halten. Letzteres ist Resultat des geringen möglichen Querschnitts der Betätigungsstange im Dichtbereich. Insbesondere ist die Ventilanordnung aber auch sicher und schnell zu schließen, da bei geöffnetem Ventil die Betätigungsstange in Schließrichtung druckbeaufschlagt ist und die Bewegungsdichtung am Ventilkörper druckkompensiert ist.

Vorteilhafte Ausgestaltungen und Weiterbildungen der erfindungsgemäßen Ventilanordnung sind Gegenstand der Unteransprüche.

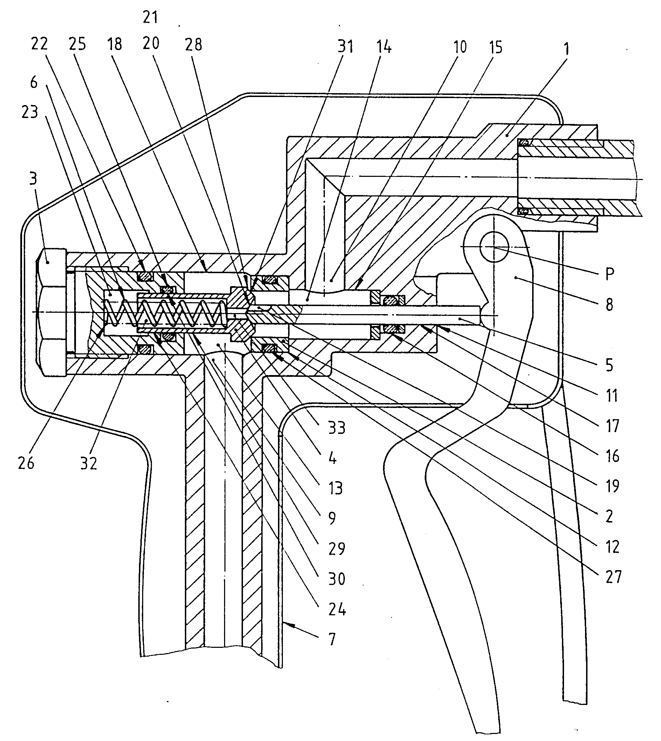

Im folgenden wird die Erfindung anhand einer lediglich ein Ausführungsbeispiel darstellenden Zeichnung näher erläutert. In der Zeichnung zeigt die einzige Figur einen Schnitt durch eine Ventilpistole mit einer erfindungsgemäßen Ventilanordnung.

Die einzige Figur zeigt zunächst ein Ventilgehäuse 1 mit einem Ventilsitz 2 und einer Verschlußschraube 3, einem Ventilkörper 4, einer Betätigungsstange 5, einer Rückstellfeder 6, alles eingebaut in einem Pistolengehäuse 7. Aus dem Inneren des Pistolengehäuses 7 herausgeführt ist ein Handhebel 8, der auf der Schwenkachse P schwenkbar gelagert ist und der manuellen Betätigung der Ventilanordnung dient.

Im Ventilgehäuse 1 befindet sich eine Eintrittsöffnung 9 und eine Austrittsöffnung 10 für das Fluid, insbesondere Wasser, sowie ein Durchtritt 11 für die Betätigungsstange 5. Im Inneren des Ventilgehäuses 1 ist eine Aufnahme 12 für den Ventilsitz 2 so angeordnet, daß die Eintrittsöffnung 9 auf der einen Seite des Ventilsitzes 2 einen Zuflußraum 13 und die Austrittsöffnung 10 auf der anderen Seite einen Abflußraum 14 bildet.

An die Aufnahme 12 für den Ventilsitz 2 schließt sich auf der Abflußseite axial ein aus dem Ventilgehäuse 1 herausgeführter Kanal 15 an, in den zunächst die Austrittsöffnung 10 mündet und der in seinem weiteren Verlauf einen Dichtungsbereich 16 und einen Führungsbereich 17 für die durch diesen Kanal 15 aus dem Ventilgehäuse 1 herausgeführte Betätigungsstange 5 aufweist. Auf der Zuflußseite schließt sich axial an die Aufnahme 12 für den Ventilsitz 2 ebenfalls ein Kanal 18 an, in den zunächst die Eintrittsöffnung 9 mündet, und der in seinem weiteren Verlauf von der Verschlußschraube 3 verschlossen ist.

Die Betätigungsstange 5 steht mit ihrem aus dem Ventilgehäuse 1 herausgeführten Ende mit dem vom Bediener zu betätigenden Handhebel 8 in Verbindung. Am anderen, im Ventilgehäuse 1 liegenden Ende weist die Betätigungsstange 5 einen mit einer Nut 19 versehenen Zentrierkegel 20 auf, der in einen entsprechenden Zentrierkegel 21 am Ventilkörper 4 eingreift.

Die nach außen mit einer Dichtung 22 abgedichtete Verschlußschraube 3 weist in der gezeichneten Ausführung eine im montierten Zustand im Ventilinneren liegende zylindrische Kammer 23 auf. Die Kammer 23 hat sowohl einen Führungsbereich 24 als auch einen Dichtungsbereich 25 für einen Führungszylinder 29 des Ventilkörpers 4. Am Boden 26 der Kammer 23 stützt sich die Rückstellfeder 6 ab.

Der Ventilsitz 2 ist fest im Ventilgehäuse 1 gelagert und gegenüber diesem mit einer Dichtung 27 abgedichtet. Der Ventilkörper 4 weist an seinem zum Ventilsitz 2 gerichteten Ende einen kegelig ausgebildeten Dichtbereich - Dichtkegel 28 - auf, an den sich in entgegengesetzter Richtung der Führungszylinder 29 anschließt. An Stelle des Dichtkegels 28 ist auch jeder anders geformte Dichtbereich denkbar, der geeignet ist, in Verbindung mit dem Ventilsitz 2 eine Ventilfunktion zu schaffen.

Der Ventilkörper 4 ist im Bereich des Führungszylinders 29 in der Verschlußschraube 3 axial beweglich gelagert und gegenüber der Verschlußschraube 3 durch eine Dichtung 25 abgedichtet. Der Führungszylinder 29 weist zumindest im Dichtbereich 30 einen Querschnitt auf, der dem vom Dichtkegel 28 und Ventilsitz 2 gebildeten Abdichtquerschnitt 31 entspricht oder gegen diesen Abdichtquerschnitt 31 um einen gewissen Betrag kleiner ausgeführt ist, um so im geschlossenen Zustand des Ventils eine definierte hydraulische Kraft auf den Dichtkegel 28 zu erzeugen.

Zum dichten Schließen des Ventils muß der Wasserfilm zwischen dem Ventilkörper 4 und dem Ventilsitz 2 durchdrungen werden. Dazu sind höhere Kräfte auf den Ventilkörper 4 nötig als zum Überwinden der Dichtungsreibung der Bewegungsdichtungen und zum Geschlossenhalten des Ventils. Deshalb wird der Querschnitt des Führungszylinders 29 im Dichtbereich 30 also zweckmäßigerweise etwas kleiner ausgeführt als der Abdichtquerschnitt 31. Im geschlossenen Zustand und bei minimal geöffnetem Ventil ergibt sich so eine die Rückstellfeder 6 unterstützende Kraft.

Der Ventilkörper 4 weist einen Kanal 32, 33 in Längsrichtung auf. Dieser beginnt auf der Seite gegenüber dem Dichtkegel 28 zweckmäßigerweise mit einem Durchmesser, der geeignet ist, die Rückstellfeder 6 aufzunehmen, und verengt sich in seinem weiteren Verlauf auf einen Durchmesser, der kleiner ist als der Durchmesser der Betätigungsstange 5. Der Kanal 33 endet auf der Seite des Dichtkegels 28 mit einem Zentrierkegel 21, in dem sich der Zentrierkegel 20 der Betätigungsstange 5 beim Öffnen des Ventils zentriert.

Damit das in der zylindrischen Kammer 23 und im Inneren des Ventilkörpers 4 eingeschlossene Wasser beim Öffnen des Ventils entweichen kann, ist der Zentrierkegel 20 der Betätigungsstange 5 mit einer Nut 19 versehen. Anstelle der Nut 19 kann auch jede andere Form eines Kanals Anwendung finden, die geeignet ist, das beim Öffnen des Ventils aus der Kammer 23 verdrängte Wasser abzuleiten. Sowohl durch die Größe des kleinen Durchmessers des Kanals 33 im Ventilkörper 4 als auch durch die Größe der Nut 19 kann das Öffnungsverhalten des Ventils beeinflußt werden. Bei sehr kleinen Querschnitten läßt sich das Ventil infolge der Drosselwirkung nur langsam öffnen. Der gefährliche Rückschlag läßt sich so vermeiden.

Die Drosselwirkung beim Öffnen des Ventils wird bevorzugt durch die Größe der Nut 19 in der Betätigungsstange 5 bestimmt, während der kleine Durchmesser des Kanals 33 im Ventilkörper 4 relativ groß ausgelegt wird.

Beim Schließen des Ventils wird die Betätigungsstange 5 im wesentlichen durch die auf sie wirkenden hydraulischen Kräfte aus dem Ventilgehäuse 1 geschoben. Dabei kann sich der Zentrierkegel 20 der Betätigungsstange 5 vom Zentrierkegel 21 des Ventilkörpers 4 lösen, so daß die Nut 19 keine drosselnde Wirkung auf das in das Innere des Ventilkörpers 4 und in die zylindrische Kammer 23 einströmende Wasser hat. Falls erforderlich, kann durch die Größe des kleinen Durchmessers des Kanals 33 im Ventilkörper 4 auch eine verlangsamte Schließbewegung erzielt werden.

Denkbar sind auch Ausgestaltungen, bei denen die Betätigungsstange 5 in Bewegungsrichtung fest mit dem Ventilkörper 4 verbunden ist, als auch Ausgestaltungen, bei denen die Betätigungsstange 5 bezüglich des Ventilkörpers 4 in Bewegungsrichtung und/oder senkrecht dazu einen definierten Bewegungsspielraum aufweist.

Möglich ist auch ein Ventilkörper ohne durchgehenden Kanal. Die Verbindung zwischen der zylindrischen Kammer 23 in der Verschlußschraube 3 und dem auf der Abflußseite liegenden Bereich des Ventilgehäuses 1 kann dann durch einen beliebig verlaufenden anderen Kanal geschaffen werden.

Für die Rückstellfeder 6 sind auch andere Anordnungen möglich, die geeignet sind, eine Kraft in Schließrichtung auf den Ventilkörper 4 zu übertragen. Die dargestellte Anordnung im Inneren des Ventilkörpers 4 und der Verschlußschraube 3 weist aber neben dem Vorteil einer kurzen Baulänge auch noch strömungstechnische Vorteile auf, da die Feder die Strömung durch das Ventil nicht behindert. Bei einer in Bewegungsrichtung des Ventilkörpers 4 ausgebildeten festen Kopplung zwischen Ventilkörper 4 und Betätigungsstange 5 kann die Rückstellfeder 6 auch außerhalb des Ventilgehäuses 1 liegen und auf die Betätigungsstange 5 wirken.

Die Dichtung 16 der Betätigungsstange 5 wird im offenen Zustand einseitig mit Druck beaufschlagt. Allerdings kann ein Hafteffekt bei der Ausführung mit einseitig aus dem Ventilgehäuse 1 herausgeführter Betätigungsstange 5 nicht auftreten, da die in Schließrichtung auf die Betätigungsstange 5 wirkenden hydraulischen Kräfte infolge der nicht vorhandenen Druckkompensation stets größer sind als die das Schließen hemmenden Haftreibungskräfte der Dichtung 16. Beim Entlasten des Handhebels 8 bewegt die Rückstellfeder 6 den Ventilkörper 4 in Richtung Ventilsitz 2. Dadurch wird auch die Betätigungsstange 5 in dieselbe Richtung bewegt. Gleichzeitig unterstützt der Druck auf der Abflußseite die Bewegung der Betätigungsstange 5. Kurz vor dem Kontakt zwischen Dichtkegel 28 und Ventilsitz 2 fällt der Druck auf der Abflußseite stark ab. Da der Führungszylinder 29 in der Regel einen etwas kleineren Querschnitt aufweist als der Abdichtquerschnitt 31, ergibt sich eine den Schließvorgang des Ventilkörpers 4 unterstützende hydraulische Kraft.

## Patentansprüche

1. Ventilanordnung mit direkt betätigtem Ventilkörper (4), insbesondere für Hochdruckspritzpistolen,
mit einem Ventilgehäuse (1) mit einem Ventilsitz (2) für den Ventilkörper (4),
mit einem Zuflußraum (13) vor dem Ventilsitz (2) und einem Abflußraum (14) hinter dem Ventilsitz (2), die im geschlossenen Zustand des Ventils durch den Ventilkörper (4) auf dem Ventilsitz (2) voneinander getrennt sind, und
mit einer Bewegungsdichtung (25) für den Ventilkörper (4) in einem Dichtungseinbauraum, die den Zuflußraum (13) am Ventilkörper (4) abdichtet,
wobei sich ein Kanal (32, 33) vom Abflußraum (14) bis zu einer Kammer (23) des Dichtungseinbauraumes der Bewegungsdichtung (25) des Ventilkörpers (4) erstreckt, die im geschlossenen Zustand des Ventils auf der dem Druck im Zuflußraum (13) abgewandten Seite liegt, so daß der Ventilkörper (4) weitgehend oder vollständig druckkompensiert ist und
wobei so außerdem die Bewegungsdichtung (25) des Ventilkörpers (4) im geöffneten Zustand des Ventils auf beiden Seiten der Dichtstelle mit dem gleichen Druck beaufschlagt ist,
wobei der Ventilkörper (4) samt Dichtungseinbauraum vollständig innerhalb des Ventilgehäuses (1) angeordnet ist und wobei der Ventilkörper (4) von einem Betätigungselement betätigbar ist, das aus dem Inneren des Ventilgehäuses (1) nach außen, abgedichtet durch eine Dichtung (16), herausgeführt ist,
**dadurch gekennzeichet**,
daß das Betätigungselement als eine in Bewegungsrichtung des Ventilkörpers (4) im Ventilgehäuse (1) verschiebbar gelagerte Betätigungsstange (5) ausgeführt, auf der Abflußseite des Ventilkörpers (4) angeordnet und nur mit dem vom Ventilkörper (4) abgewandten Ende aus dem Ventilgehäuse (1) herausgeführt ist.

2. Ventilanordnung nach Anspruch 1, dadurch gekennzeichnet, daß sich der Kanal (32, 33) zentrisch durch den Ventilkörper (4) erstreckt und daß der Durchmesser des Kanals (32, 33) auf der vom Ventilsitz (2) abgewandten Seite so bemessen ist, daß eine Rückstellfeder (6) für den Ventilkörper (4) zumindest teilweise im Inneren des Ventilkörpers (4) angeordnet werden kann.

3. Ventilanordnung nach Anspruch 1 oder 2, dadurch gekennzeichnet, daß die Kammer (23) einteilig mit einer Verschlußschraube (3) des Ventilgehäuses (1) ausgebildet ist.

4. Ventilanordnung nach einem der Ansprüche 1 bis 3, dadurch gekennzeichnet, daß die Betätigungsstange (5) in Bewegungsrichtung mit dem Ventilkörper (4) fest verbunden ist.

5. Ventilanordnung nach Anspruch 4, dadurch gekennzeichnet, daß die Verbindung zwischen der Betätigungsstange (5) und dem Ventilkörper (4) in Bewegungsrichtung des Ventilkörpers (4) und/oder senkrecht dazu einen definierten Bewegungsspielraum aufweist.

6. Ventilanordnung nach einem der Ansprüche 1 bis 3, dadurch gekennzeichnet, daß zwischen der Betätigungsstange (5) und dem Ventilkörper (4) keine feste Verbindung besteht, sondern die Betätigungsstange (5) und der Ventilkörper (4) nur in Bewegungsrichtung stumpf aneinander anliegen.

7. Ventilanordnung nach einem der Ansprüche 1 bis 6, dadurch gekennzeichnet, daß der Kanal (32, 33) im Inneren des Ventilkörpers (4) im dem Ventilsitz (2) zugewandten Bereich einen Durchmesser aufweist, der kleiner ist als der Durchmesser der Betätigungsstange (5), jedoch in Richtung der Betätigungsstange (5) eine kegelförmige Erweiterung (21) aufweist.

8. Ventilanordnung nach Anspruch 7, dadurch gekennzeichnet, daß die Betätigungsstange (5) an ihrem dem Ventilkörper (4) zugewandten Ende kegelförmig ausgebildet ist, und zwar mit einem Kegelwinkel, der vorzugsweise dem Kegelwinkel der kegelförmigen Erweiterung (21) entspricht.

9. Ventilanordnung nach einem der Ansprüche 1 bis 8, dadurch gekennzeichnet, daß die Betätigungsstange (5) an ihrem dem Ventilkörper (4) zugewandten Ende einen axial verlaufenden Kanal (19), vorzugsweise in Form einer Nut, aufweist, so daß die Strömung des bei der Öffnung des Ventils aus der Kammer (23) verdrängten Fluids gedrosselt wird.

10. Ventilanordnung nach einem der Ansprüche 1 bis 8, dadurch gekennzeichnet, daß die Betätigungsstange (5) im Bereich direkt vor dem Ventilkörper (4) einen Durchmesser aufweist, der größer ist als der Durchmesser des Kanals (32, 33) im Inneren des Ventilkörpers (4) im Bereich seines dem Ventilsitz (2) zugewandten Endes, und daß dieser Bereich der Betätigungsstange (5) einen Kanal, vorzugsweise in Form einer Nut, aufweist, durch den das bei der Öffnung des Ventils aus der Kammer (23) verdrängte bzw. beim Schließen des Ventils in die Kammer (23) zurückströmende Fluid so strömt, daß dessen Strömung gedrosselt wird.

11. Ventilanordnung nach einem der Ansprüche 1 bis 10, dadurch gekennzeichnet, daß der Kleinste Durchmesser des Kanals (32, 33) im Ventilkörper (4) so bemessen ist, daß sich infolge der Drosselwirkung auf das bei der Bewegung des Ventilkörpers (4) aus der Kammer (23) verdrängte bzw. in die Kammer (23) einströmende Fluid eine gedämpfte Bewegung des Ventilkörpers ergibt.

12. Ventilanordnung nach einem der Ansprüche 1 bis 11, dadurch gekennzeichnet, daß der Ventilkörper (4) im Bereich des Kanals (32) einen Außendurchmesser aufweist, der im Dichtbereich (30) gleich groß oder, vorzugsweise, etwas kleiner ausgeführt ist als der Abdichtquerschnitt (31) am Ventilsitz (2).
